# EUROPEAN PATENT APPLICATION

(11) **EP 4 645 911 A1**
(43) Date of publication of application: **05.11.2025**
(21) Application number: 23909825.4
(22) Date of filing: 23.11.2023
(51) Int. Cl.: H04W 4/02, H04L 67/52, H04W 4/029, H04W 64/00, H04W 4/021, H04W 4/16

(54) **VALUE-ADDED POSITIONING METHOD AND APPARATUS, AND STORAGE MEDIUM**

(30) Priority: 27.12.2022 CN 202211690243
(71) Applicant: Datang Mobile Communications Equipment Co., Ltd., Beijing 100085 (CN)
(72) Inventor: WU, Liping, Beijing 100085 (CN); XIONG, Chunshan, Beijing 100085 (CN)
(74) Representative: Ipsilon
(86) International application number: PCT/CN2023/133700
(87) International publication number: WO 2024/139893

(57) **Abstract**

Provided in the embodiments of the present disclosure are a value-added positioning method and apparatus, and a storage medium. The method comprises: acquiring a first value-added positioning service request and/or a subscription message, which is sent by a vertical application network element; acquiring location information of a target terminal from a location management network element; and sending a response and/or subscription notification message to the vertical application network element.

## Description

### CROSS-REFERENCES TO RELATED APPLICATIONS

The present application claims priority to Chinese patent application No. 202211690243.3 filed on December 27, 2022, entitled "Value-Added Positioning Method and Apparatus, and Storage Medium", which is hereby incorporated by reference in its entirety.

### FIELD

The present application relates to the field of communications, and in particular, to methods and apparatuses for value-added positioning, and a storage medium.

### BACKGROUND

In the traditional 5^{th} generation mobile communication technology (5G), an application layer positioning service architecture is based on a service enabler architecture layer for verticals (SEAL). After a location management server (LMS) obtains a positioning need from a vertical application layer server (VALS), the LMS sends the need to a location management client (LMC) of a terminal, a 5G core (5GC) network and a 3^{rd} party location server through a 3^{rd} generation partnership project (3GPP) or non-3GPP network to obtain a location of the terminal, and then reports obtained fused location information to the VALS. However, this positioning service can only provide reporting, monitoring, subscription, etc., of basic terminal location information, and cannot further process, analyze, or organize the location information.

In addition to 5G-based positioning, there is also non-5G positioning, such as Bluetooth, global positioning system (GPS), etc., in traditional positioning technologies. Value-added services based on non-5G positioning are mainly provided by Internet companies, but there are problems such as limited positioning ranges and insufficient positioning accuracies. For example, GPS positioning is easily affected by obstructions such as clouds, trees, and buildings; Bluetooth, the 4^{th} generation mobile communication technology (4G), etc., have low positioning accuracy and cannot meet needs for high-precision positioning in some scenarios.

### BRIEF SUMMARY

Embodiments of the present application provide methods and apparatuses for value-added positioning, and a storage medium to solve a problem of low positioning accuracy in the related art.

An embodiment of the present application provides a method for value-added positioning, performed by a value-added location server (VLS), including:
obtaining a first value-added location service request and/or subscription message sent from a vertical application layer function;
obtaining location information of a target terminal indicated through the first value-added location service request and/or subscription message from a location management function; and
sending a response and/or subscription notification message to the vertical application layer function based on the location information and value-added location service requirement information included in the first value-added location service request and/or subscription message, where the response and/or subscription notification message includes a value-added positioning result.

In some embodiments, sending the response and/or subscription notification message to the vertical application layer function based on the location information and the value-added location service requirement information included in the first value-added location service request and/or subscription message includes:
determining whether the location information meets a trigger condition of a value-added location service indicated through the value-added location service requirement information; and
sending the response and/or subscription notification message to the vertical application layer function in case that the trigger condition of the value-added location service is met.

In some embodiments, the trigger condition includes one or more types of the following conditions:
whether a location of the target terminal is within a range of a geofence indicated through the value-added location service request information; or,
whether a location of the target terminal reaches a target location indicated through the value-added location service request information.

In some embodiments, the method further includes:
sending an alarm notification message to the vertical application layer function in case that the location of the target terminal is within the range of the geofence indicated through the value-added location service requirement information, where the alarm notification message is used to notify the vertical application layer function to send an alarm to the target terminal.

In some embodiments, the method further includes:
obtaining an update message sent from the vertical application layer function in case that the vertical application layer function needs to update the value-added location service requirement information; and
sending an update response message to the vertical application layer function after updating corresponding information based on the update message.

In some embodiments, sending the response and/or subscription notification message to the vertical application layer function based on the location information and the value-added location service requirement information included in the first value-added location service request and/or subscription message includes:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

In some embodiments, the method further includes:
verifying whether the vertical application layer function is authorized to initiate a value-added location service; and
storing the value-added location service requirement information included in the first value-added location service request and/or subscription message in case that the vertical application layer function is authorized to initiate a value-added location service.

In some embodiments, the method further includes:
sending a value-added location service response message to the vertical application layer function, where the value-added location service response message indicates to accept a value-added location service request.

In some embodiments, the method further includes:
obtaining a value-added location service revoke subscription message sent from the vertical application layer function.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

An embodiment of the present application further provides a method for value-added positioning, performed by a vertical application layer function, including:
sending a first value-added location service request and/or subscription message to a value-added location server; and
obtaining a response and/or subscription notification message sent from the value-added location server, where the response and/or subscription notification message includes a value-added positioning result, and the value-added positioning result is obtained based on location information, obtained from a location management function, of a target terminal indicated through the first value-added location service request and/or subscription message, and value-added location service requirement information included in the first value-added location service request and/or subscription message.

In some embodiments, the method further includes:
receiving an alarm notification message sent from the value-added location server in case that a location of the target terminal is within a range of a geofence indicated through the value-added location service requirement information, where the alarm notification message is used to notify the vertical application layer function to send an alarm to the target terminal.

In some embodiments, the method further includes:
sending an update message to the value-added location server in case that the vertical application layer function needs to update the value-added location service requirement information; and
obtaining an update response message sent from the value-added location server.

In some embodiments, the method further includes:
obtaining a value-added location service response message sent from the value-added location server, where the value-added location service response message indicates that the value-added location server accepts a value-added location service request.

In some embodiments, the method further includes:
sending a value-added location service revoke subscription message to the value-added location server.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

An embodiment of the present application further provides a network device, for use in a value-added location server, including a memory, a transceiver and a processor,
where the memory is used for storing a computer program, the transceiver is used for receiving and sending data under control of the processor, and the processor is used for reading the computer program in the memory and performing the following operations:
obtaining a first value-added location service request and/or subscription message sent from a vertical application layer function;
obtaining location information of a target terminal indicated through the first value-added location service request and/or subscription message from a location management function; and
sending a response and/or subscription notification message to the vertical application layer function based on the location information and value-added location service requirement information included in the first value-added location service request and/or subscription message, where the response and/or subscription notification message includes a value-added positioning result.

In some embodiments, sending the response and/or subscription notification message to the vertical application layer function based on the location information and the value-added location service requirement information included in the first value-added location service request and/or subscription message includes:
determining whether the location information meets a trigger condition of a value-added location service indicated through the value-added location service requirement information; and
sending the response and/or subscription notification message to the vertical application layer function in case that the trigger condition of the value-added location service is met.

In some embodiments, the trigger condition includes one or more types of the following conditions:
whether a location of the target terminal is within a range of a geofence indicated through the value-added location service request information; or,
whether a location of the target terminal reaches a target location indicated through the value-added location service request information.

In some embodiments, the processor is further used for reading the computer program in the memory and performing the following operations:
sending an alarm notification message to the vertical application layer function in case that the location of the target terminal is within the range of the geofence indicated through the value-added location service requirement information, where the alarm notification message is used to notify the vertical application layer function to send an alarm to the target terminal.

In some embodiments, the processor is further used for reading the computer program in the memory and performing the following operations:
obtaining an update message sent from the vertical application layer function in case that the vertical application layer function needs to update the value-added location service requirement information; and
sending an update response message to the vertical application layer function after updating corresponding information based on the update message.

In some embodiments, sending the response and/or subscription notification message to the vertical application layer function based on the location information and the value-added location service requirement information included in the first value-added location service request and/or subscription message includes:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

In some embodiments, the processor is further used for reading the computer program in the memory and performing the following operations:
verifying whether the vertical application layer function is authorized to initiate a value-added location service; and
storing the value-added location service requirement information included in the first value-added location service request and/or subscription message in case that the vertical application layer function is authorized to initiate a value-added location service.

In some embodiments, the processor is further used for reading the computer program in the memory and performing the following operations:
sending a value-added location service response message to the vertical application layer function, where the value-added location service response message indicates to accept a value-added location service request.

In some embodiments, the processor is further used for reading the computer program in the memory and performing the following operations:
obtaining a value-added location service revoke subscription message sent from the vertical application layer function.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

An embodiment of the present application further provides a network device, for use in a vertical application layer function, including a memory, a transceiver and a processor,
where the memory is used for storing a computer program, the transceiver is used for receiving and sending data under control of the processor, and the processor is used for reading the computer program in the memory and performing the following operations:
sending a first value-added location service request and/or subscription message to a value-added location server; and
obtaining a response and/or subscription notification message sent from the value-added location server, where the response and/or subscription notification message includes a value-added positioning result, and the value-added positioning result is obtained based on location information, obtained from a location management function, of a target terminal indicated through the first value-added location service request and/or subscription message, and value-added location service requirement information included in the first value-added location service request and/or subscription message.

In some embodiments, the processor is further used for reading the computer program in the memory and performing the following operations:
receiving an alarm notification message sent from the value-added location server in case that a location of the target terminal is within a range of a geofence indicated through the value-added location service requirement information, where the alarm notification message is used to notify the vertical application layer function to send an alarm to the target terminal.

In some embodiments, the processor is further used for reading the computer program in the memory and performing the following operations:
sending an update message to the value-added location server in case that the vertical application layer function needs to update the value-added location service requirement information; and
obtaining an update response message sent from the value-added location server.

In some embodiments, the processor is further used for reading the computer program in the memory and performing the following operations:
obtaining a value-added location service response message sent from the value-added location server, where the value-added location service response message indicates that the value-added location server accepts a value-added location service request.

In some embodiments, the processor is further used for reading the computer program in the memory and performing the following operations:
sending a value-added location service revoke subscription message to the value-added location server.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

An embodiment of the present application further provides an apparatus for value-added positioning, including:
a first obtaining module, used for obtaining a first value-added location service request and/or subscription message sent from a vertical application layer function;
a second obtaining module, used for obtaining location information of a target terminal indicated through the first value-added location service request and/or subscription message from a location management function; and
a first sending module, used for sending a response and/or subscription notification message to the vertical application layer function based on the location information and value-added location service requirement information included in the first value-added location service request and/or subscription message, where the response and/or subscription notification message includes a value-added positioning result.

In some embodiments, the first sending module is used for:
determining whether the location information meets a trigger condition of a value-added location service indicated through the value-added location service requirement information; and
sending the response and/or subscription notification message to the vertical application layer function in case that the trigger condition of the value-added location service is met.

In some embodiments, the trigger condition includes one or more types of the following conditions:
whether a location of the target terminal is within a range of a geofence indicated through the value-added location service request information; or,
whether a location of the target terminal reaches a target location indicated through the value-added location service request information.

In some embodiments, the apparatus further includes:
a seventh sending module, used for sending an alarm notification message to the vertical application layer function in case that the location of the target terminal is within the range of the geofence indicated through the value-added location service requirement information, where the alarm notification message is used to notify the vertical application layer function to send an alarm to the target terminal.

In some embodiments, the apparatus further includes:
a fourth obtaining module, used for obtaining an update message sent from the vertical application layer function in case that the vertical application layer function needs to update the value-added location service requirement information; and
a third sending module, used for sending an update response message to the vertical application layer function after updating corresponding information based on the update message.

In some embodiments, the first sending module is used for:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

In some embodiments, the apparatus further includes:
a first verifying module, used for verifying whether the vertical application layer function is authorized to initiate a value-added location service; and
a first storing module, used for storing the value-added location service requirement information included in the first value-added location service request and/or subscription message in case that the vertical application layer function is authorized to initiate a value-added location service.

In some embodiments, the apparatus further includes:
a fourth sending module, used for sending a value-added location service response message to the vertical application layer function, where the value-added location service response message indicates to accept a value-added location service request.

In some embodiments, the apparatus further includes:
a fifth obtaining module, used for obtaining a value-added location service revoke subscription message sent from the vertical application layer function.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

An embodiment of the present application further provides an apparatus for value-added positioning, including:
a second sending module, used for sending a first value-added location service request and/or subscription message to a value-added location server; and
a third obtaining module, used for obtaining a response and/or subscription notification message sent from the value-added location server, where the response and/or subscription notification message includes a value-added positioning result, and the value-added positioning result is obtained based on location information, obtained from a location management function, of a target terminal indicated through the first value-added location service request and/or subscription message, and value-added location service requirement information included in the first value-added location service request and/or subscription message.

In some embodiments, the apparatus further includes:
an eighth obtaining module, used for receiving an alarm notification message sent from the value-added location server in case that a location of the target terminal is within a range of a geofence indicated through the value-added location service requirement information, where the alarm notification message is used to notify a vertical application layer function to send an alarm to the target terminal.

In some embodiments, the apparatus further includes:
a fifth sending module, used for sending an update message to the value-added location server in case that a vertical application layer function needs to update the value-added location service requirement information; and
a sixth obtaining module, used for obtaining an update response message sent from the value-added location server.

In some embodiments, the apparatus further includes:
a seventh obtaining module, used for obtaining a value-added location service response message sent from the value-added location server, where the value-added location service response message indicates that the value-added location server accepts a value-added location service request.

In some embodiments, the apparatus further includes:
a sixth sending module, used for sending a value-added location service revoke subscription message to the value-added location server.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

An embodiment of the present application further provides a processor readable storage medium, where the processor readable storage medium stores a computer program, and the computer program is used for causing a processor to perform steps of any of the method for value-added positioning described above.

An embodiment of the present application further provides a computer readable storage medium, where the computer readable storage medium stores a computer program, and the computer program is used for causing a computer to perform steps of any of the method for value-added positioning described above.

An embodiment of the present application further provides a communication device readable storage medium, where the communication device readable storage medium stores a computer program, and the computer program is used for causing a communication device to perform steps of any of the method for value-added positioning described above.

An embodiment of the present application further provides a chip product readable storage medium, where the chip product readable storage medium stores a computer program, and the computer program is used for causing a chip product to perform steps of any of the method for value-added positioning described above.

In the methods and apparatuses for value-added positioning, and the storage medium provided by the embodiments of the present application, by adding the value-added location server to a traditional application layer location service platform based on a service enabler architecture layer for verticals (SEAL) architecture, a positioning accuracy of the location service is improved, traditional value-added location service requests of different vertical industries for location service is enhanced, a personalized need of the industry may be responded, and an expansion capability of the industry is deepened. In case that this value-added location service function is deployed on an operator side, a service scope of the operator may be expanded, operating income of the operator may be increased, and competitive strength of the operator against Internet companies may be enhanced.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a diagram of a value-added location service architecture according to an embodiment of the present application;
FIG. 2 is a first schematic flowchart of a method for value-added positioning according to an embodiment of the present application;
FIG. 3 is a schematic flowchart of a geofence service according to an embodiment of the present application;
FIG. 4 is a schematic flowchart of a history trace playback service according to an embodiment of the present application;
FIG. 5 is a schematic flowchart of an arrival reminder service according to an embodiment of the present application;
FIG. 6 is a schematic flowchart of a subscription procedure of a value-added service according to an embodiment of the present application;
FIG. 7 is a schematic flowchart of a subscription notification procedure of a value-added service according to an embodiment of the present application;
FIG. 8 is a second schematic flowchart of a method for value-added positioning according to an embodiment of the present application;
FIG. 9 is a schematic structural diagram of a value-added location server according to an embodiment of the present application;
FIG. 10 is a schematic structural diagram of a vertical application layer function according to an embodiment of the present application;
FIG. 11 is a first schematic structural diagram of an apparatus for value-added positioning according to an embodiment of the present application; and
FIG. 12 is a second schematic structural diagram of an apparatus for value-added positioning according to an embodiment of the present application.

### DETAILED DESCRIPTION

In the traditional 5^{th} generation mobile communication technology (5G) positioning technology, a location service of the application layer based on a service enabler architecture layer for verticals (SEAL) architecture can only provide general location services, such as reporting, monitoring, subscription, etc., of basic terminal location information, and cannot further process, analyze, and organize the location information. Services such as geofence management and alarm information subscription required by smart factories, history trace query required by smart police, and positioning navigation, heat map, and location data analysis required by smart supermarkets cannot be provided. The traditional 5G positioning technology cannot meet the customized needs of different vertical industries for value-added location service.

Traditional non-5G technologies, such as global positioning system (GPS) and Bluetooth, can position terminals (user equipment (UE)), but there are problems such as limited positioning ranges and insufficient positioning accuracies. For example, GPS positioning is easily affected by obstructions such as clouds, trees, buildings, etc.; Bluetooth, the 4^{th} generation mobile communication technology (4G), etc., have low positioning accuracies and cannot meet the needs for high-precision positioning in some scenarios. The value-added location service is mainly carried out by Internet companies, and operators only act as "pipelines" for positioning. Therefore, it is necessary for operators and upstream and downstream communication service providers to develop 5G-based positioning technology and corresponding value-added location services.

To make the objectives, solutions and advantages of the embodiments of the present application clearer, the solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

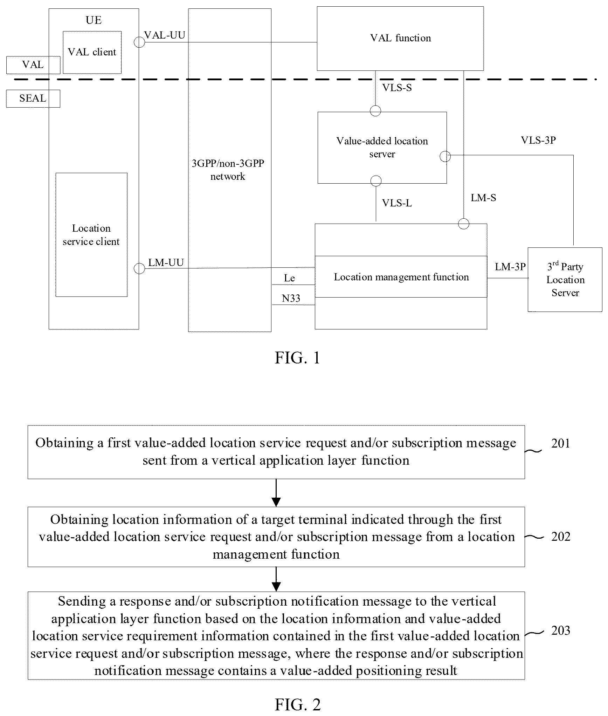

FIG. 1 is a diagram of a value-added location service architecture according to an embodiment of the present application. As shown in FIG. 1, an embodiment of the present application provides a method for value-added positioning, where a value-added location server (VLS) is added to a location service platform based on a traditional service enabler architecture layer for verticals (SEAL) architecture, to meet customized needs of different vertical industries for location services.

In this architecture, the VLS may be deployed on an operator side or on a 3^{rd} party side trusted by a network, and main functions of the VLS are as follows.
1. Requirements of a value-added location service are obtained from a vertical application layer server (VALS) through an interface VLS-S and stored, where the requirements include area, time, user, accuracy, frequency, etc., of positioning.
2. A corresponding positioning request is initiated to a location management server (LMS) function through the interface VLS-L.
3. After receiving location information of a user equipment (UE) returned by the LMS and a 3^{rd} party location server, the VLS analyzes and processes positioning information, and matches processed results with positioning requirements of the VALS. If the match is satisfied, it is reported to the VALS through the VLS-S interface.
4. If the VALS adds, updates, deletes or subscribes to the positioning requirements of the value-added service, the VLS also synchronously updates positioning information stored in itself and initiates corresponding update requests to the LMS and the 3^{rd} party location server.

In the method for value-added positioning, which adds a value-added location server to a traditional application layer location service platform based on the SEAL architecture, provided by the embodiments of the present application, the positioning information is analyzed and processed by the value-added location server, which improves a positioning accuracy of the location service, enhances traditional positioning services for value-added location service requests of different vertical industries, is able to respond to personalized needs of the industry, deepens an expansion capability of the industry, and accelerates large-scale application of 5G location services for typical industries such as factories, supermarkets, airports, and parks. In case that the value-added location service function is deployed on the operator side, a service scope of the operator may be expanded, operating income of the operator may be increased, the status of the operator being "pipeline" may be changed, and competitive strength of the operator against Internet companies may be enhanced.

FIG. 2 is a first schematic flowchart of a method for value-added positioning according to an embodiment of the present application. As shown in FIG. 2, an embodiment of the present application provides a method for value-added positioning, performed by a value-added location server. The method includes the following steps.

Step 201: obtaining a first value-added location service request and/or subscription message sent from a vertical application layer function.

In an embodiment, the vertical application layer (VAL) function sends a provision request and/or a subscription message to the value-added location server, which is used to request the value-added location server to provision a corresponding location service or to subscribe to a corresponding location service from the value-added location server.

For example, the vertical application layer function may send a provision request for a geofence to the value-added location server. The provision request for the geofence may include information of a user for whom the geofence needs to be performed, such as a mobile station integrated service digital network (MSISDN), a specific geographic area of the geofence, a trigger condition, a report frequency, etc.

For another example, the vertical application layer function may send a provision request for a history trace playback to the value-added location server. The provision request for the history trace playback may include information (such as a MSISDN) of a user for whom the playback of the history trace is needed, a playback time point and range, a playback location, a report frequency, etc.

For another example, the vertical application layer function may send a provision request for an arrival reminder to the value-added location server. The provision request for the arrival reminder may include information (such as a MSISDN) of a user for whom the arrival reminder is needed, an arrival location (such as a shopping mall), etc.

For another example, the vertical application network layer element may send a value-added location subscription message for certain users to the value-added location server. The value-added location subscription message may include an identifier (such as a MSISDN) of a user, a location service, a trigger condition of the subscription, etc.

Step 202: obtaining location information of a target terminal indicated through the first value-added location service request and/or subscription message from a location management function.

In an embodiment, the value-added location server sends a user positioning request to the LMS based on a provision request and/or subscription message sent from the vertical application layer function, requesting to obtain positioning information of these users. The LMS may obtain fused and accurate user positioning information from multiple channels such as a terminal location management client (LMC), a 3^{rd} generation partnership project (3GPP) network, a non-3GPP network, a 3^{rd} party server, etc. Then the LMS sends the user positioning information to the value-added location server. The positioning information of the user is the same as the location information of the target terminal.

Step 203: sending a response and/or subscription notification message to the vertical application layer function based on the location information and value-added location service requirement information included in the first value-added location service request and/or subscription message, where the response and/or subscription notification message includes a value-added positioning result.

In an embodiment, the value-added location server sends the response and/or subscription notification message to the vertical application layer function by matching a location of a user with a corresponding location service requirement or based on the request message sent from the vertical application layer function. The response and/or subscription notification message includes the value-added positioning result.

For example, the value-added location server sends information (such as a location, a time, etc.) of a user to the vertical application layer function by matching a location of the user with a requirement of a geofence.

For another example, the vertical application layer function sends a history trace playback request to the value-added location server, where the history trace playback request carries a user identifier (such as a MSISDN), playback time points (a start time and an end time), location information, etc. Based on the history trace playback request, the value-added location server sends user history location trace information that meets the requirement from a database, which stores the information, to the vertical application layer function.

For another example, the value-added location server sends information (such as a location, a time, etc.) of a user to the vertical application layer function by matching a location of the user with a stored arrival location requirement.

In the method for value-added positioning provided by the embodiments of the present application, the value-added location server is added to the traditional application layer location service platform based on the SEAL architecture, and the positioning information is analyzed and processed by the value-added location server, which improves a positioning accuracy of the location service, enhances traditional positioning services for value-added location service requests of different vertical industries, is able to respond to personalized needs of the industry, deepens an expansion capability of the industry, and accelerates large-scale application of 5G location service for typical industries such as factories, supermarkets, airports, and parks. In case that the value-added location service function is deployed on the operator side, a service scope of the operator may be expanded, operating income of the operator may be increased, the status of the operator being "pipeline" may be changed, and competitive strength of the operator against Internet companies may be enhanced.

In some embodiments, sending the response and/or subscription notification message to the vertical application layer function based on the location information and the value-added location service requirement information included in the first value-added location service request and/or subscription message includes:
determining whether the location information meets a trigger condition of a value-added location service indicated through the value-added location service requirement information; and
sending the response and/or subscription notification message to the vertical application layer function in case that the trigger condition of the value-added location service is met.

In an embodiment, the value-added location server determines whether a location of a user meets a corresponding location service requirement by matching the location of the user with the corresponding location service requirement. In case that the requirement is met, the value-added location server sends the response and/or subscription notification message to the vertical application layer function. The response and/or subscription notification message includes the value-added positioning result. The location service requirement is the trigger condition of the value-added location service.

For example, the value-added location server determines whether a user meets a geofence trigger condition sent from the vertical application layer function by matching a location of the user with a geofence requirement. In case that the geofence trigger condition is met, the VLS sends information (such as a location, a time, etc.) of the user to the vertical application layer function.

For another example, the value-added location server determines whether a user meets a trigger condition of an arrival reminder sent from the vertical application layer function by matching a location of the user with a stored arrival location requirement. In case that the trigger condition is met, the VLS sends information (such as a location, a time, etc.) of the user to the vertical application layer function.

In the method for value-added positioning provided by the embodiments of the present application, the value-added location server is added to the traditional application layer location service platform based on the SEAL architecture, and the positioning information is analyzed and processed by the value-added location server to determine whether the location of the user meets the location service requirement of the vertical application layer function, which improves a positioning accuracy of the location service, enhances traditional positioning services for value-added location service requests of different vertical industries, is able to respond to personalized needs of the industry, and deepens an expansion capability of the industry.

In some embodiments, the trigger condition includes one or more types of the following conditions:
whether a location of the target terminal is within a range of a geofence indicated through the value-added location service request information; or,
whether a location of the target terminal reaches a target location indicated through the value-added location service request information.

In an embodiment, the trigger condition of the value-added location service may be entering a range of a geofence or reaching a target location, but is not limited to these two trigger conditions, and may also be various conditions such as leaving the range of the geofence.

In the method for value-added positioning provided by the embodiments of the present application, the value-added location server is added to the traditional application layer location service platform based on the SEAL architecture, and the positioning information is analyzed and processed by the value-added location server to determine whether the location of the user meets the location service requirement of the vertical application layer function, which improves a positioning accuracy of the location service, enhances traditional positioning services for value-added location service requests of different vertical industries, is able to respond to personalized needs of the industry, and deepens an expansion capability of the industry.

In some embodiments, the method further includes:
sending an alarm notification message to the vertical application layer function in case that the location of the target terminal is within the range of the geofence indicated through the value-added location service requirement information, where the alarm notification message is used to notify the vertical application layer function to send an alarm to the target terminal.

In an embodiment, in case that the location of the target terminal is within or outside the range of the geofence indicated through the value-added location service requirement information, the value-added location server may send the location information of the target terminal to the vertical application layer function, and the vertical application layer function may send an alarm to the target terminal based on the location information of the target terminal. Alternatively, in case that the location of the target terminal is within or outside the range of the geofence indicated through the value-added location service requirement information, the value-added location server may also generate an alarm notification message based on the value-added location service requirement information and send the alarm notification message to the vertical application layer function.

For example, in case that it is within the range of the geofence indicated through the value-added location service requirement information, after receiving the location information of the user, the vertical application layer function sends a warning to the target terminal, notifying the user through a text message that "you have entered illegally, please exit as soon as possible".

In the method for value-added positioning provided by the embodiments of the present application, the value-added location server is added to the traditional application layer location service platform based on the SEAL architecture, and the value-added location server may generate an alarm message based on a location requirement, which enhances traditional positioning services for value-added location service requests of different vertical industries, is able to respond to personalized needs of the industry, and deepens an expansion capability of the industry.

In some embodiments, the method further includes:
obtaining an update message sent from the vertical application layer function in case that the vertical application layer function needs to update the value-added location service requirement information; and
sending an update response message to the vertical application layer function after updating corresponding information based on the update message.

In an embodiment, after receiving the provision request and/or subscription message sent from the vertical application layer function, the value-added location server stores the provision request and/or subscription message. In case that the vertical application layer function needs to update the value-added location service requirement information, the vertical application layer function sends the update message to the value-added location server, and the value-added location server updates the stored provision request and/or subscription message based on the update message. After the update is completed, the value-added location server sends the update response message to the vertical application layer function.

In the method for value-added positioning provided by the embodiments of the present application, the value-added location server is added to the traditional application layer location service platform based on the SEAL architecture, and the value-added location server updates the location requirement, which improves a positioning accuracy of the location service, enhances traditional positioning services for value-added location service requests of different vertical industries, is able to respond to personalized needs of the industry, and deepens an expansion capability of the industry.

In some embodiments, sending the response and/or subscription notification message to the vertical application layer function based on the location information and the value-added location service requirement information included in the first value-added location service request and/or subscription message includes:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

In an embodiment, the value-added location server stores, based on a provision request and/or subscription message sent from the vertical application layer function for a first time, the location information of the user obtained from the LMS. The vertical application layer function sends a service request and/or subscription message to the value-added location server for a second time, and the service request and/or subscription message includes a location service requirement. The value-added location server filters out, based on the location service requirement, appropriate information from stored user location information, and sends the appropriate information to the vertical application layer function.

For example, after obtaining the positioning information of the user from the LMS, the value-added location server transforms the positioning information into a format required for history trace playback and stores it. The vertical application layer function initiates a history trace playback request for a certain user to the value-added location server, where the history trace playback request carries a user identifier (such as a MSISDN), playback time points (a start time and an end time), location information, etc. Based on the requirement of the vertical application layer function, the value-added location server sends the user history location trace information that meets the requirement from a database, which stores the user history location trace information, to the vertical application layer function.

In the method for value-added positioning provided by the embodiments of the present application, the value-added location server is added to the traditional application layer location service platform based on the SEAL architecture, and the positioning information is analyzed and processed by the value-added location server, which improves a positioning accuracy of the location service, enhances traditional positioning services for value-added location service requests of different vertical industries, is able to respond to personalized needs of the industry, and deepens an expansion capability of the industry.

In some embodiments, the method further includes:
verifying whether the vertical application layer function is authorized to initiate a value-added location service; and
storing the value-added location service requirement information included in the first value-added location service request and/or subscription message in case that the vertical application layer function is authorized to initiate a value-added location service.

In an embodiment, after receiving the provision request and/or subscription message sent from the vertical application layer function for the first time, the value-added location server verifies whether the vertical application layer function is authorized to initiate the value-added location service. In case that the vertical application layer function is authorized to initiate the value-added location service, the value-added location server stores the value-added location service requirement information included in the provision request and/or subscription message sent from the vertical application layer function for the first time.

In the method for value-added positioning provided by the embodiments of the present application, the value-added location server is added to the traditional application layer location service platform based on the SEAL architecture, and location service initiated by the vertical application layer function is verified by the value-added location server, which improves security of the location service.

In some embodiments, the method further includes:
sending a value-added location service response message to the vertical application layer function, where the value-added location service response message indicates to accept a value-added location service request.

In an embodiment, in case that the vertical application layer function is authorized to initiate the value-added location service, the value-added location server stores the value-added location service requirement information included in the provision request and/or subscription message sent from the vertical application layer function for the first time. Then the value-added location server sends the value-added location service response message to the vertical application layer function, and the value-added location service response message indicates acceptance of the value-added location service request.

In the method for value-added positioning provided by the embodiments of the present application, the value-added location server is added to the traditional application layer location service platform based on the SEAL architecture, and location service initiated by the vertical application layer function is verified by the value-added location server, which improves security of the location service.

In some embodiments, the method further includes:
obtaining a value-added location service revoke subscription message sent from the vertical application layer function.

In an embodiment, in case that the vertical application layer function decides to stop the location service for the user, the vertical application layer function sends the value-added location service revoke subscription message to the value-added location server. After receiving the message, the value-added location server stops performing positioning the user and deletes corresponding stored information. Then the value-added location server sends a revoke subscription response message to the vertical application layer function.

In the method for value-added positioning provided by the embodiments of the present application, the value-added location server is added to the traditional application layer location service platform based on the SEAL architecture, and the positioning information is analyzed and processed by the value-added location server, which improves a positioning accuracy of the location service, enhances traditional positioning services for value-added location service requests of different vertical industries, is able to respond to personalized needs of the industry, and deepens an expansion capability of the industry.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

In an embodiment, based on different location service requirements of vertical application layer functions, the value-added location service requirement information may include, but is not limited to, information such as an identifier of a target terminal, a range of a geofence, a trigger condition of a value-added location service, a start time of a history trace playback, an end time of a history trace playback, and a target location of an arrival reminder.

For example, in case that the vertical application layer function initiates a geofence service to the value-added location server, the value-added location service requirement information may include information such as an identifier of a target terminal, a range of a geofence, and a trigger condition of the value-added location service.

For another example, in case that the vertical application layer function initiates a history trace playback service to the value-added location server, the value-added location service requirement information may include information such as an identifier of a target terminal, a start time of a history trace playback, and an end time of the history trace playback.

For another example, in case that the vertical application layer function initiates an arrival reminder service to the value-added location server, the value-added location service requirement information may include information such as an identifier of a target terminal, and a target location of an arrival reminder.

In the method for value-added positioning provided by the embodiments of the present application, the value-added location server is added to the traditional application layer location service platform based on the SEAL architecture, and the positioning information is analyzed and processed by the value-added location server, which improves a positioning accuracy of the location service, enhances traditional positioning services for value-added location service requests of different vertical industries, is able to respond to personalized needs of the industry, and deepens an expansion capability of the industry.

The method in the above embodiments is further described below with reference to several specific examples.

### Example one.

A smart factory sets up a safety area and creates a fence at a construction site. Workers are prohibited from entering during construction. When a user is detected entering or leaving a corresponding fence area, an alarm will be triggered to warn a worker that he has illegally entered and please leave as soon as possible.

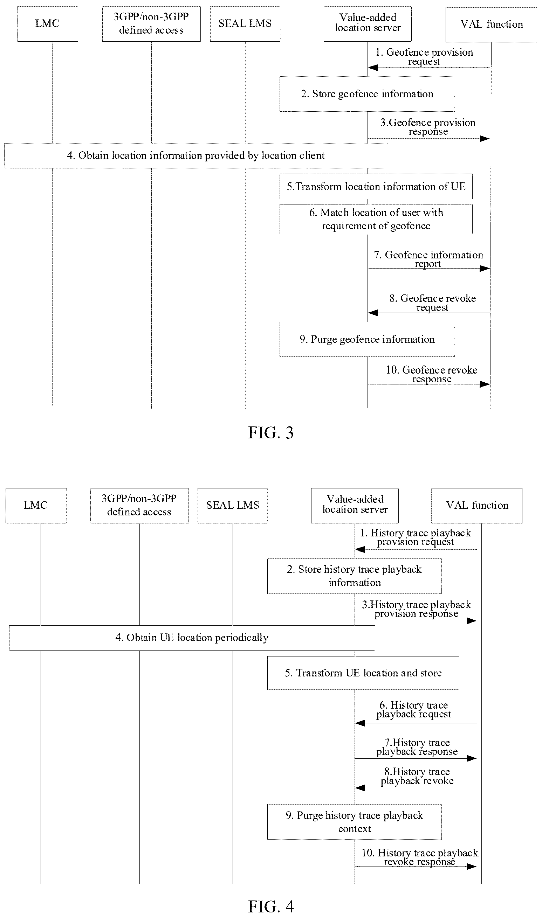

FIG. 3 is a schematic flowchart of a geofence service according to an embodiment of the present application. As shown in FIG. 3, a specific implementation procedure of the geofence service is as follows.
1. A vertical application layer function sends a geofence provision request to a VLS, including information (such as a MSISDN) of a user for whom a geofence needs to be performed, a specific geographical location of the geofence, a trigger condition, a report frequency, etc.
2. The VLS checks whether the vertical application layer function is authorized to initiate the geofence service. If it is allowed, the VLS stores received geofence request information.
3. The VLS sends a response message to the vertical application layer function to accept the geofence service request.
4. The VLS initiates a user positioning request for the geofence service to an LMS, requesting to obtain positioning information of these users. The LMS may obtain fused and accurate user positioning information from multiple channels such as a terminal LMC, a 3GPP network, a non-3GPP network, a 3^{rd} party server, etc.
5. After obtaining the user positioning information from the LMS, the VLS needs to transform the positioning information into a format required by the geofence.
6. By matching a location of the user with a requirement of the geofence, the VLS determines whether the user meets the geofence trigger condition sent from the vertical application layer function.
7. In case that the geofence trigger condition is met, the VLS sends information (such as a location, a time, etc.) of the user to the vertical application layer function. In case that the geofence trigger condition is not met, the VLS continues to repeat steps 4 to 7. In case that the geofence trigger condition is met, after receiving the location information of the user, the vertical application layer function may send an alarm to a terminal to notify the user that "you have entered illegally, please exit as soon as possible." Alternatively, the VLS may also generate an alarm base on the trigger condition and notify the vertical application layer function.
8. In case that the vertical application layer function decides to stop the geofence service for the user, the vertical application layer function sends a geofence revoke request to the VLS.
9. The VLS stops positioning the user and purges corresponding geofence storage information.
10. The VLS sends a geofence revoke response to the vertical application layer function.

### Example two.

A history trace refers to history locations and an action trace of a specified terminal in a specified time range. According to business needs, a start time and an end time of positioning for the specified terminal need to be obtained, and then the history trace of location information of the terminal within these two times is returned to the vertical application layer server.

FIG. 4 is a schematic flowchart of a history trace playback service according to an embodiment of the present application. As shown in FIG. 4, a specific implementation procedure of the history trace playback service is as follows.
1. A vertical application layer function sends history trace playback provision information to a VLS, including information (such as a MSISDN) of a user for whom a history trace playback is requested, a playback time point and range, a playback location, a report frequency, etc.
2. The VLS checks whether the vertical application layer function is authorized to initiate the history trace playback service. If it is allowed, the VLS stores received history trace playback information.
3. The VLS sends a response message to the vertical application layer function to accept the history trace playback service request.
4. The VLS initiates a user positioning request for the history trace playback service to an LMS server, requesting to obtain positioning information of these users. The LMS server may obtain fused and accurate user positioning information from multiple channels such as a terminal LMC, a 3GPP network, a non-3GPP network, a 3^{rd} party location service, etc.
5. After obtaining the user positioning information from the LMS, the VLS needs to transform the positioning information into a format required for history trace playback and store it.
6. The vertical application layer function initiates a history trace playback request for a certain user to the VLS, carrying a user identifier (such as a MSISDN), playback time points (a start time and an end time), location information, etc.
7. Based on a requirement of the vertical application layer function, the VLS sends user history location trace information that meets the requirement from a database, which stores the user history location trace information, to the vertical application layer function. After the vertical application layer function receives the user history location information, the VLS may perform further processing, such as counting a length of time entering a certain area, etc.
8. In case that the vertical application layer function decides to stop the history trace playback service for the user, the vertical application layer function sends a history trace playback revoke request to the VLS.
9. The VLS stops positioning the user and purges corresponding history trace storage.
10. The VLS sends a history trace playback revoke response to the vertical application layer function.

### Example three.

A supermarket is one of the most important indoor commercial environments. Indoor positioning technology provides important support for intelligent transformation of supermarkets. Main features of the indoor positioning technology are that a positioning terminal is on a consumer side, the positioning terminal is required to be universal, positioning accuracy is required to be 1 to 3 meters, and it may locate a parking space or a supermarket store area. For store management operators, a location-based service may provide them with member arrival reminders, promotion activities to reach customers, etc., to improve store operating efficiency.

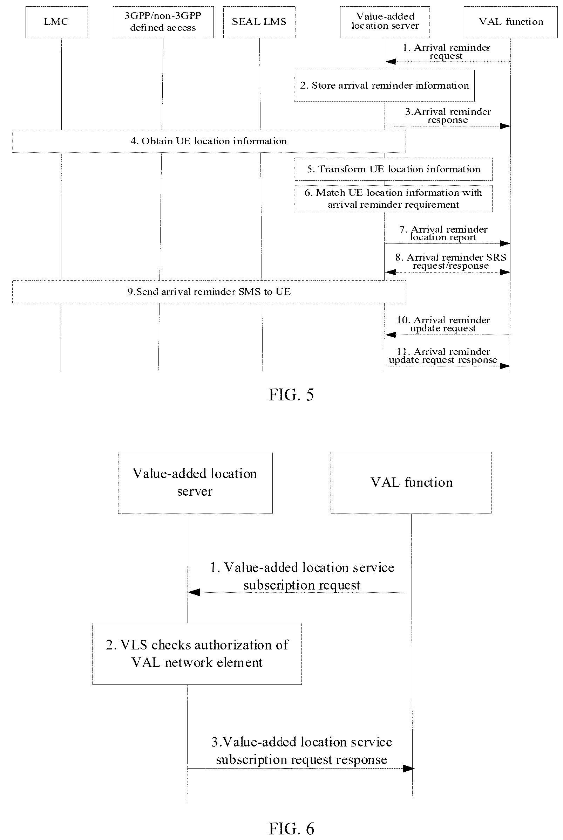

FIG. 5 is a schematic flowchart of an arrival reminder service according to an embodiment of the present application. As shown in FIG. 5, a specific implementation procedure of the arrival reminder service is as follows.
1. A vertical application layer function sends an arrival reminder request message to a VLS, including information (such as a MSISDN) of a user for whom the arrival reminder is needed, an arrival location (such as a shopping mall), etc.
2. The VLS checks whether the vertical application layer function (such as a merchant) is authorized to initiate the arrival reminder service. If it is allowed, the VLS stores received arrival reminder information.
3. The VLS sends a response message to the vertical application layer function to accept the arrival reminder service request.
4. The VLS initiates a user positioning request for the arrival reminder service to an LMS server, requesting to obtain positioning information of these users. The LMS server may obtain fused and accurate user positioning information from multiple channels such as a terminal LMC, a 3GPP network, a non-3GPP network, etc.
5. After obtaining the user positioning information from the LMS, the VLS needs to transform the positioned location information into a format required by the arrival reminder.
6. By matching a location of a user with a stored arrival location requirement, the VLS determines whether the user meets a trigger condition, sent from the vertical application layer function, of the arrival reminder.
7. In case that the trigger condition is met, the VLS sends the user location information to the vertical application layer function, including a location, a time, etc.
8. The vertical application layer function may choose to push messages to the user through a network side or an application side as needed, such as sending an arrival reminder short message.
9. In case of receiving, from the vertical application layer function, a request for sending a short message for arrival reminder, the VLS triggers sending of the short message for arrival reminder, and sends the short message for arrival reminder to the user through a 3GPP network.
10. In case that the vertical application layer function needs to update information of the user of the arrival reminder service, the vertical application layer function sends an update message to the VLS, including updated information(such as a MSISDN) of the user, etc.
11. After updating stored information, the VLS sends an arrival reminder update response to the vertical application layer function.

### Example four.

A vertical application layer function may initiate a subscription request for a value-added location service to a VLS.

FIG. 6 is a schematic flowchart of a subscription procedure of a value-added service according to an embodiment of the present application. As shown in FIG. 6, a specific implementation procedure of a subscription of a value-added service is as follows.
1. A vertical application layer function initiates a value-added location subscription request for certain users to a VLS, carrying identifiers (such as a MSISDN) of the users, location services, subscription trigger conditions, etc.
2. The VLS checks whether the vertical application layer function is allowed initiate a subscription request for the value-added location service.
3. In case that the authorization in step 2 is passed, the VLS sends a subscription request response for the value-added location service to the vertical application layer function.

After receiving positioning information of a terminal, the VLS may send subscription notification information for the value-added location service to the vertical application layer function based on the subscription trigger condition.

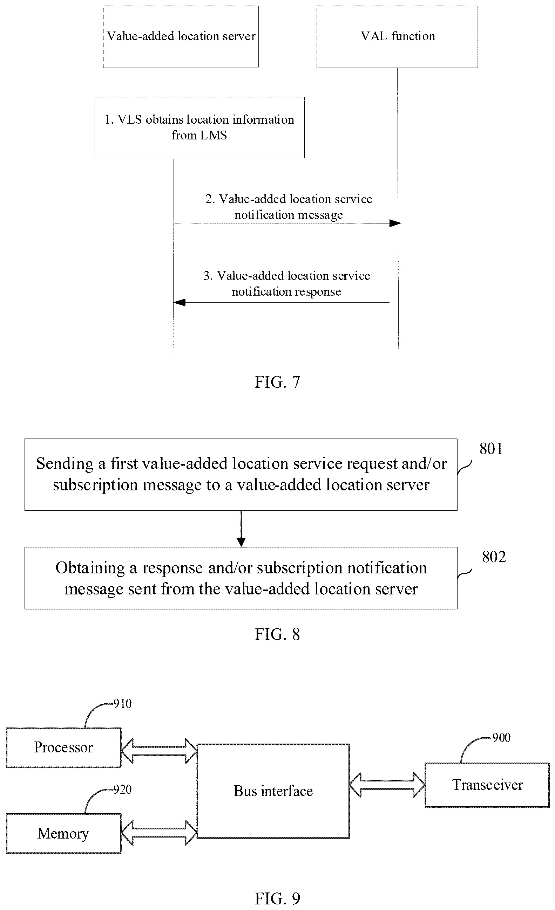

FIG. 7 is a schematic flowchart of a subscription notification procedure of a value-added service according to an embodiment of the present application. As shown in FIG. 7, a specific implementation procedure of a subscription notification of the value-added service is as follows.
1. A VLS analyzes UE location information reported by an LMS to obtain value-added positioning information of a UE, and by checking a subscription trigger condition of the value-added location service sent from the vertical application layer function, matching the location information to see if the positioning information meets the requirement.
2. In case that the requirement is met, the VLS sends a UE value-added location notification message to the vertical application layer function, carrying the location information of the UE.
3. After receiving the message, the vertical application layer function replies with a response message.

In the method for value-added positioning, which adds a value-added location server to a traditional application layer location service platform based on the SEAL architecture, provided by the embodiments of the present application, the positioning information is analyzed and processed by the value-added location server, which improves a positioning accuracy of the location service, enhances traditional positioning services for value-added location service requests of different vertical industries, is able to respond to personalized needs of the industry, deepens an expansion capability of the industry, and accelerates large-scale application of 5G location service for typical industries such as factories, supermarkets, airports, and parks. In case that the value-added location service function is deployed on the operator side, a service scope of the operator may be expanded, operating income of the operator may be increased, the status of the operator being "pipeline" may be changed, and competitive strength of the operator against Internet companies may be enhanced.

FIG. 8 is a second schematic flowchart of a method for value-added positioning according to an embodiment of the present application. As shown in FIG. 8, an embodiment of the present application provides a method for value-added positioning, performed by a vertical application layer function, and the method includes:
step 801: sending a first value-added location service request and/or subscription message to a value-added location server; and
step 802: obtaining a response and/or subscription notification message sent from the value-added location server, where the response and/or subscription notification message includes a value-added positioning result, and the value-added positioning result is obtained based on location information, obtained from a location management function, of a target terminal indicated through the first value-added location service request and/or subscription message, and value-added location service requirement information included in the first value-added location service request and/or subscription message.

In some embodiments, the method further includes:
receiving an alarm notification message sent from the value-added location server in case that a location of the target terminal is within a range of a geofence indicated through the value-added location service requirement information, where the alarm notification message is used to notify the vertical application layer function to send an alarm to the target terminal.

In some embodiments, the method further includes:
sending an update message to the value-added location server in case that the vertical application layer function needs to update the value-added location service requirement information; and
obtaining an update response message sent from the value-added location server.

In some embodiments, the method further includes:
obtaining a value-added location service response message sent from the value-added location server, where the value-added location service response message indicates that the value-added location server accepts a value-added location service request.

In some embodiments, the method further includes:
sending a value-added location service revoke subscription message to the value-added location server.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

The method for value-added positioning provided by the embodiment of the present application may refer to the above-mentioned method embodiment performed by the value-added location server, and may achieve the same effect. The parts and beneficial effects of this embodiment that are the same as those of the above-mentioned corresponding method embodiment are not repeated here.

FIG. 9 is a schematic structural diagram of a value-added location server according to an embodiment of the present application. As shown in FIG. 9, the value-added location server includes a memory 920, a transceiver 900 and a processor 910, where
the memory 920 is used for storing a computer program, the transceiver 900 is used for receiving and sending data under control of the processor 910, and the processor 910 is used for reading the computer program in the memory 920 and performing the following operations:
obtaining a first value-added location service request and/or subscription message sent from a vertical application layer function;
obtaining location information of a target terminal indicated through the first value-added location service request and/or subscription message from a location management function; and
sending a response and/or subscription notification message to the vertical application layer function based on the location information and value-added location service requirement information included in the first value-added location service request and/or subscription message, where the response and/or subscription notification message includes a value-added positioning result.

In an embodiment, the transceiver 900 is used for receiving and sending data under control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 900 may include multiple elements, i.e., including a transmitter and a receiver, units for providing communication with various other devices over transmission media including wireless channels, wired channels, fiber optic cables, and the like. For different user equipment, a user interface 930 may be an interface capable of externally or internally connecting the required equipment, and the connected equipment includes, but not limited to, a keypad, a display, a speaker, a microphone, a joystick, and the like.

The processor 910 is responsible for managing the bus architecture and general processing, and the memory 920 may store data used by the processor 910 when performing operations.

The processor 910 may be a central processing unit (CPU), an application specific integrated circuit (ASIC), a field-programmable gate array (FPGA), or a complex programmable logic device (CPLD), the processor may also adopt a multi-core architecture.

The processor calls the computer program stored in the memory to execute any of the methods provided by the embodiments of the present application in accordance with the obtained executable instructions. The processor and the memory may also be physically arranged separately.

In some embodiments, sending the response and/or subscription notification message to the vertical application layer function based on the location information and the value-added location service requirement information included in the first value-added location service request and/or subscription message includes:
determining whether the location information meets a trigger condition of a value-added location service indicated through the value-added location service requirement information; and
sending the response and/or subscription notification message to the vertical application layer function in case that the trigger condition of the value-added location service is met.

In some embodiments, the trigger condition includes one or more types of the following conditions:
whether a location of the target terminal is within a range of a geofence indicated through the value-added location service request information; or,
whether a location of the target terminal reaches a target location indicated through the value-added location service request information.

In some embodiments, the processor is further used for reading the computer program in the memory and performing the following operations:
sending an alarm notification message to the vertical application layer function in case that the location of the target terminal is within the range of the geofence indicated through the value-added location service requirement information, where the alarm notification message is used to notify the vertical application layer function to send an alarm to the target terminal.

In some embodiments, the processor is further used for reading the computer program in the memory and performing the following operations:
obtaining an update message sent from the vertical application layer function in case that the vertical application layer function needs to update the value-added location service requirement information; and
sending an update response message to the vertical application layer function after updating corresponding information based on the update message.

In some embodiments, sending the response and/or subscription notification message to the vertical application layer function based on the location information and the value-added location service requirement information included in the first value-added location service request and/or subscription message includes:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

In some embodiments, the processor is further used for reading the computer program in the memory and performing the following operations:
verifying whether the vertical application layer function is authorized to initiate a value-added location service; and
storing the value-added location service requirement information included in the first value-added location service request and/or subscription message in case that the vertical application layer function is authorized to initiate a value-added location service.

In some embodiments, the processor is further used for reading the computer program in the memory and performing the following operations:
sending a value-added location service response message to the vertical application layer function, where the value-added location service response message indicates to accept a value-added location service request.

In some embodiments, the processor is further used for reading the computer program in the memory and performing the following operations:
obtaining a value-added location service revoke subscription message sent from the vertical application layer function.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

It should be noted here that the above value-added location server provided by the embodiments of the present application may implement all the method steps implemented by the above method embodiments performed by the value-added location server, and may achieve the same effect. The parts and beneficial effects of this embodiment that are the same as those of the method embodiment are not repeated here.

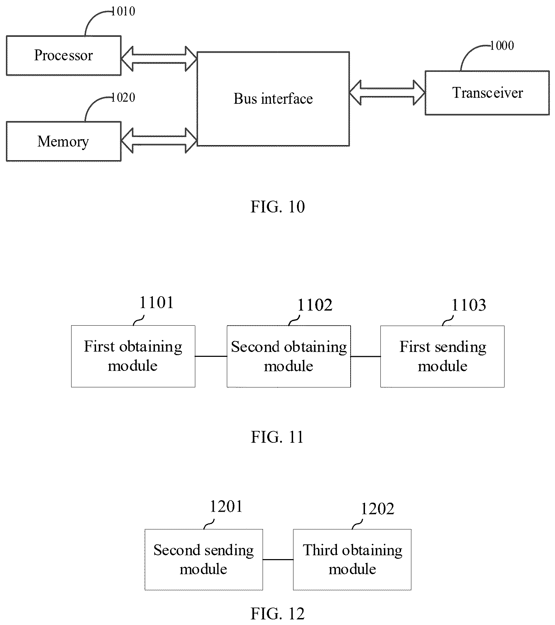

FIG. 10 is a schematic structural diagram of a vertical application layer function according to an embodiment of the present application. As shown in FIG. 10, the vertical application layer function includes a memory 1020, a transceiver 1000 and a processor 1010, where
the memory 1020 is used for storing a computer program, the transceiver 1000 is used for receiving and sending data under control of the processor 1010, and the processor 1010 is used for reading the computer program in the memory 1020 and performing the following operations:
sending a first value-added location service request and/or subscription message to a value-added location server; and
obtaining a response and/or subscription notification message sent from the value-added location server, where the response and/or subscription notification message includes a value-added positioning result, and the value-added positioning result is obtained based on location information, obtained from a location management function, of a target terminal indicated through the first value-added location service request and/or subscription message, and value-added location service requirement information included in the first value-added location service request and/or subscription message.

In an embodiment, the transceiver 1000 is used for receiving and sending data under control of the processor 1010.

In FIG. 10, a bus architecture may include any number of interconnected buses and bridges, which are linked together through various circuits of one or more processors represented by the processor 1020 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field-programmable gate array (FPGA), or a complex programmable logic device (CPLD), the processor may also adopt a multi-core architecture.

In some embodiments, the processor is further used for reading the computer program in the memory and performing the following operations:
receiving an alarm notification message sent from the value-added location server in case that a location of the target terminal is within a range of a geofence indicated through the value-added location service requirement information, where the alarm notification message is used to notify the vertical application layer function to send an alarm to the target terminal.

In some embodiments, the processor is further used for reading the computer program in the memory and performing the following operations:
sending an update message to the value-added location server in case that the vertical application layer function needs to update the value-added location service requirement information; and
obtaining an update response message sent from the value-added location server.

In some embodiments, the processor is further used for reading the computer program in the memory and performing the following operations:
obtaining a value-added location service response message sent from the value-added location server, where the value-added location service response message indicates that the value-added location server accepts a value-added location service request.

In some embodiments, the processor is further used for reading the computer program in the memory and performing the following operations:
sending a value-added location service revoke subscription message to the value-added location server.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

In an embodiment, the above vertical application layer function provided by the embodiments of the present application may implement all the method steps implemented by the above method embodiments performed by the vertical application layer function, and may achieve the same effect. The parts and beneficial effects of this embodiment that are the same as those of the method embodiment are not repeated here.

FIG. 11 is a first schematic structural diagram of an apparatus for value-added positioning according to an embodiment of the present application. As shown in FIG. 11, an embodiment of the present application provides an apparatus for value-added positioning, including a first obtaining module 1101, a second obtaining module 1102 and a first sending module 1103, where
the first obtaining module 1101 is used for obtaining a first value-added location service request and/or subscription message sent from a vertical application layer function;
the second obtaining module 1102 is used for obtaining location information of a target terminal indicated through the first value-added location service request and/or subscription message from a location management function; and
the first sending module 1103 is used for sending a response and/or subscription notification message to the vertical application layer function based on the location information and value-added location service requirement information included in the first value-added location service request and/or subscription message, where the response and/or subscription notification message includes a value-added positioning result.

In some embodiments, the first sending module is used for:
determining whether the location information meets a trigger condition of a value-added location service indicated through the value-added location service requirement information; and
sending the response and/or subscription notification message to the vertical application layer function in case that the trigger condition of the value-added location service is met.

In some embodiments, the trigger condition includes one or more types of the following conditions:
whether a location of the target terminal is within a range of a geofence indicated through the value-added location service request information; or,
whether a location of the target terminal reaches a target location indicated through the value-added location service request information.

In some embodiments, the apparatus further includes:
a seventh sending module, used for sending an alarm notification message to the vertical application layer function in case that the location of the target terminal is within the range of the geofence indicated through the value-added location service requirement information, where the alarm notification message is used to notify the vertical application layer function to send an alarm to the target terminal.

In some embodiments, the apparatus further includes:
a fourth obtaining module, used for obtaining an update message sent from the vertical application layer function in case that the vertical application layer function needs to update the value-added location service requirement information; and
a third sending module, used for sending an update response message to the vertical application layer function after updating corresponding information based on the update message.

In some embodiments, the first sending module is used for:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

In some embodiments, the apparatus further includes:
a first verifying module, used for verifying whether the vertical application layer function is authorized to initiate a value-added location service; and
a first storing module, used for storing the value-added location service requirement information included in the first value-added location service request and/or subscription message in case that the vertical application layer function is authorized to initiate a value-added location service.

In some embodiments, the apparatus further includes:
a fourth sending module, used for sending a value-added location service response message to the vertical application layer function, where the value-added location service response message indicates to accept a value-added location service request.

In some embodiments, the apparatus further includes:
a fifth obtaining module, used for obtaining a value-added location service revoke subscription message sent from the vertical application layer function.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

In an embodiment, the above apparatus for value-added positioning provided by the embodiments of the present application may implement all the method steps implemented by the above method embodiments performed by the value-added location server, and may achieve the same effect. The parts and beneficial effects of this embodiment that are the same as those of the method embodiment are not repeated here.

FIG. 12 is a second schematic structural diagram of an apparatus for value-added positioning according to an embodiment of the present application. As shown in FIG. 12, an embodiment of the present application provides an apparatus for value-added positioning, including a second sending module 1201 and a third obtaining module 1202, where
the second sending module 1201 is used for sending a first value-added location service request and/or subscription message to a value-added location server; and
the third obtaining module 1202 is used for obtaining a response and/or subscription notification message sent from the value-added location server, where the response and/or subscription notification message includes a value-added positioning result, and the value-added positioning result is obtained based on location information, obtained from a location management function, of a target terminal indicated through the first value-added location service request and/or subscription message, and value-added location service requirement information included in the first value-added location service request and/or subscription message.

In some embodiments, the apparatus further includes:
an eighth obtaining module, used for receiving an alarm notification message sent from the value-added location server in case that a location of the target terminal is within a range of a geofence indicated through the value-added location service requirement information, where the alarm notification message is used to notify a vertical application layer function to send an alarm to the target terminal.

In some embodiments, the apparatus further includes:
a fifth sending module, used for sending an update message to the value-added location server in case that a vertical application layer function needs to update the value-added location service requirement information; and
a sixth obtaining module, used for obtaining an update response message sent from the value-added location server.

In some embodiments, the apparatus further includes:
a seventh obtaining module, used for obtaining a value-added location service response message sent from the value-added location server, where the value-added location service response message indicates that the value-added location server accepts a value-added location service request.

In some embodiments, the apparatus further includes:
a sixth sending module, used for sending a value-added location service revoke subscription message to the value-added location server.

In some embodiments, the value-added location service requirement information includes one or more types of the following information:
an identifier of a target terminal;
a range of a geofence;
a trigger condition of a value-added location service;
a start time of a history trace playback;
an end time of a history trace playback; or,
a target location of an arrival reminder.

In an embodiment, the above apparatus for value-added positioning provided by the embodiments of the present application may implement all the method steps implemented by the above method embodiments performed by the vertical application layer function, and may achieve the same effect. The parts and beneficial effects of this embodiment that are the same as those of the method embodiment are not repeated here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment of the present application further provides a computer readable storage medium, where the computer readable storage medium stores a computer program, and the computer program is used for causing a computer to perform any of the methods for value-added positioning provided by the above-mentioned method embodiments.

In an embodiment, the above computer readable storage medium provided by the embodiments of the present application may implement all the method steps implemented by the above method embodiments, and may achieve the same effect. The parts and beneficial effects of this embodiment that are the same as those of the method embodiment are not repeated here.

It should be noted that the computer readable storage medium may be any available medium or data storage device that may be accessed by a processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

It should also be noted that the terms "first", "second", etc. in the embodiments of the present application are used to distinguish similar objects, and are not used to describe a specific order or sequence. In an embodiment, the terms used in this way may be interchangeable under appropriate circumstances, so that the embodiments of the present application may be implemented in an order other than those illustrated or described here, and the objects distinguished by "first" and "second" are generally of one type, and the number of objects is not limited. For example, a first object may be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

## Claims

1. A method for value-added positioning, performed by a value-added location server, comprising:
obtaining a first value-added location service request and/or subscription message sent from a vertical application layer function;
obtaining location information of a target terminal indicated through the first value-added location service request and/or subscription message from a location management function; and
sending a response and/or subscription notification message to the vertical application layer function based on the location information and value-added location service requirement information comprised in the first value-added location service request and/or subscription message, wherein the response and/or subscription notification message comprises a value-added positioning result.

2. The method of claim 1, wherein sending the response and/or subscription notification message to the vertical application layer function based on the location information and the value-added location service requirement information comprised in the first value-added location service request and/or subscription message comprises:
determining whether the location information meets a trigger condition of a value-added location service indicated through the value-added location service requirement information; and
sending the response and/or subscription notification message to the vertical application layer function in case that the trigger condition of the value-added location service is met.

3. The method of claim 2, wherein the trigger condition comprises one or more types of the following conditions:
whether a location of the target terminal is within a range of a geofence indicated through the value-added location service request information; or,
whether a location of the target terminal reaches a target location indicated through the value-added location service request information.

4. The method of claim 2, further comprising:
sending an alarm notification message to the vertical application layer function in case that a location of the target terminal is within a range of a geofence indicated through the value-added location service requirement information, wherein the alarm notification message is used to notify the vertical application layer function to send an alarm to the target terminal.

5. The method of claim 2, further comprising:
obtaining an update message sent from the vertical application layer function in case that the vertical application layer function needs to update the value-added location service requirement information; and
sending an update response message to the vertical application layer function after updating corresponding information based on the update message.

6. The method of claim 1, wherein sending the response and/or subscription notification message to the vertical application layer function based on the location information and the value-added location service requirement information comprised in the first value-added location service request and/or subscription message comprises:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

7. The method of claim 1, further comprising:
verifying whether the vertical application layer function is authorized to initiate a value-added location service; and
storing the value-added location service requirement information comprised in the first value-added location service request and/or subscription message in case that the vertical application layer function is authorized to initiate a value-added location service.

8. The method of claim 1, further comprising:
sending a value-added location service response message to the vertical application layer function, wherein the value-added location service response message indicates to accept a value-added location service request.

9. The method of claim 1, further comprising:
obtaining a value-added location service revoke subscription message sent from the vertical application layer function.

10. The method of claim 1, wherein the value-added location service requirement information comprises one or more types of the following information:
an identifier of a target terminal;
a range of a geofence;
a trigger condition of a value-added location service;
a start time of a history trace playback;
an end time of a history trace playback; or,
a target location of an arrival reminder.

11. A method for value-added positioning, performed by a vertical application layer function, comprising:
sending a first value-added location service request and/or subscription message to a value-added location server; and
obtaining a response and/or subscription notification message sent from the value-added location server, wherein the response and/or subscription notification message comprises a value-added positioning result, and the value-added positioning result is obtained based on location information, obtained from a location management function, of a target terminal indicated through the first value-added location service request and/or subscription message, and value-added location service requirement information comprised in the first value-added location service request and/or subscription message.

12. The method of claim 11, further comprising:
receiving an alarm notification message sent from the value-added location server in case that a location of the target terminal is within a range of a geofence indicated through the value-added location service requirement information, wherein the alarm notification message is used to notify the vertical application layer function to send an alarm to the target terminal.

13. The method of claim 11, further comprising:
sending an update message to the value-added location server in case that the vertical application layer function needs to update the value-added location service requirement information; and
obtaining an update response message sent from the value-added location server.

14. The method of claim 11, further comprising:
obtaining a value-added location service response message sent from the value-added location server, wherein the value-added location service response message indicates that the value-added location server accepts a value-added location service request.

15. The method of claim 11, further comprising:
sending a value-added location service revoke subscription message to the value-added location server.

16. The method of claim 11, wherein the value-added location service requirement information comprises one or more types of the following information:
an identifier of a target terminal;
a range of a geofence;
a trigger condition of a value-added location service;
a start time of a history trace playback;
an end time of a history trace playback; or,
a target location of an arrival reminder.

17. A network device, for use in a value-added location server, comprising a memory, a transceiver and a processor,
wherein the memory is used for storing a computer program, the transceiver is used for receiving and sending data under control of the processor, and the processor is used for reading the computer program in the memory and performing the following operations:
obtaining a first value-added location service request and/or subscription message sent from a vertical application layer function;
obtaining location information of a target terminal indicated through the first value-added location service request and/or subscription message from a location management function; and
sending a response and/or subscription notification message to the vertical application layer function based on the location information and value-added location service requirement information comprised in the first value-added location service request and/or subscription message, wherein the response and/or subscription notification message comprises a value-added positioning result.

18. The network device of claim 17, wherein sending the response and/or subscription notification message to the vertical application layer function based on the location information and the value-added location service requirement information comprised in the first value-added location service request and/or subscription message comprises:
determining whether the location information meets a trigger condition of a value-added location service indicated through the value-added location service requirement information; and
sending the response and/or subscription notification message to the vertical application layer function in case that the trigger condition of the value-added location service is met.

19. The network device of claim 18, wherein the trigger condition comprises one or more types of the following conditions:
whether a location of the target terminal is within a range of a geofence indicated through the value-added location service request information; or,
whether a location of the target terminal reaches a target location indicated through the value-added location service request information.

20. The network device of claim 18, wherein the processor is further used for reading the computer program in the memory and performing the following operations:
sending an alarm notification message to the vertical application layer function in case that a location of the target terminal is within a range of a geofence indicated through the value-added location service requirement information, wherein the alarm notification message is used to notify the vertical application layer function to send an alarm to the target terminal.

21. The network device of claim 18, wherein the processor is further used for reading the computer program in the memory and performing the following operations:
obtaining an update message sent from the vertical application layer function in case that the vertical application layer function needs to update the value-added location service requirement information; and
sending an update response message to the vertical application layer function after updating corresponding information based on the update message.

22. The network device of claim 17, wherein sending the response and/or subscription notification message to the vertical application layer function based on the location information and the value-added location service requirement information comprised in the first value-added location service request and/or subscription message comprises:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

23. The network device of claim 17, wherein the processor is further used for reading the computer program in the memory and performing the following operations:
verifying whether the vertical application layer function is authorized to initiate a value-added location service; and
storing the value-added location service requirement information comprised in the first value-added location service request and/or subscription message in case that the vertical application layer function is authorized to initiate a value-added location service.

24. The network device of claim 17, wherein the processor is further used for reading the computer program in the memory and performing the following operations:
sending a value-added location service response message to the vertical application layer function, wherein the value-added location service response message indicates to accept a value-added location service request.

25. The network device of claim 17, wherein the processor is further used for reading the computer program in the memory and performing the following operations:
obtaining a value-added location service revoke subscription message sent from the vertical application layer function.

26. The network device of claim 17, wherein the value-added location service requirement information comprises one or more types of the following information:
an identifier of a target terminal;
a range of a geofence;
a trigger condition of a value-added location service;
a start time of a history trace playback;
an end time of a history trace playback; or,
a target location of an arrival reminder.

27. A network device, for use in a vertical application layer function, comprising a memory, a transceiver and a processor,
wherein the memory is used for storing a computer program, the transceiver is used for receiving and sending data under control of the processor, and the processor is used for reading the computer program in the memory and performing the following operations:
sending a first value-added location service request and/or subscription message to a value-added location server; and
obtaining a response and/or subscription notification message sent from the value-added location server, wherein the response and/or subscription notification message comprises a value-added positioning result, and the value-added positioning result is obtained based on location information, obtained from a location management function, of a target terminal indicated through the first value-added location service request and/or subscription message, and value-added location service requirement information comprised in the first value-added location service request and/or subscription message.

28. The network device of claim 27, wherein the processor is further used for reading the computer program in the memory and performing the following operations:
receiving an alarm notification message sent from the value-added location server in case that a location of the target terminal is within a range of a geofence indicated through the value-added location service requirement information, wherein the alarm notification message is used to notify the vertical application layer function to send an alarm to the target terminal.

29. The network device of claim 27, wherein the processor is further used for reading the computer program in the memory and performing the following operations:
sending an update message to the value-added location server in case that the vertical application layer function needs to update the value-added location service requirement information; and
obtaining an update response message sent from the value-added location server.

30. The network device of claim 27, wherein the processor is further used for reading the computer program in the memory and performing the following operations:
obtaining a value-added location service response message sent from the value-added location server, wherein the value-added location service response message indicates that the value-added location server accepts a value-added location service request.

31. The network device of claim 27, wherein the processor is further used for reading the computer program in the memory and performing the following operations:
sending a value-added location service revoke subscription message to the value-added location server.

32. The network device of claim 27, wherein the value-added location service requirement information comprises one or more types of the following information:
an identifier of a target terminal;
a range of a geofence;
a trigger condition of a value-added location service;
a start time of a history trace playback;
an end time of a history trace playback; or,
a target location of an arrival reminder.

33. An apparatus for value-added positioning, comprising:
a first obtaining module, used for obtaining a first value-added location service request and/or subscription message sent from a vertical application layer function;
a second obtaining module, used for obtaining location information of a target terminal indicated through the first value-added location service request and/or subscription message from a location management function; and
a first sending module, used for sending a response and/or subscription notification message to the vertical application layer function based on the location information and value-added location service requirement information comprised in the first value-added location service request and/or subscription message, wherein the response and/or subscription notification message comprises a value-added positioning result.

34. The apparatus of claim 33, wherein the first sending module is used for:
determining whether the location information meets a trigger condition of a value-added location service indicated through the value-added location service requirement information; and
sending the response and/or subscription notification message to the vertical application layer function in case that the trigger condition of the value-added location service is met.

35. The apparatus of claim 34, wherein the trigger condition comprises one or more types of the following conditions:
whether a location of the target terminal is within a range of a geofence indicated through the value-added location service request information; or,
whether a location of the target terminal reaches a target location indicated through the value-added location service request information.

36. The apparatus of claim 34, further comprising:
a seventh sending module, used for sending an alarm notification message to the vertical application layer function in case that a location of the target terminal is within a range of a geofence indicated through the value-added location service requirement information, wherein the alarm notification message is used to notify the vertical application layer function to send an alarm to the target terminal.

37. The apparatus of claim 34, further comprising:
a fourth obtaining module, used for obtaining an update message sent from the vertical application layer function in case that the vertical application layer function needs to update the value-added location service requirement information; and
a third sending module, used for sending an update response message to the vertical application layer function after updating corresponding information based on the update message.

38. The apparatus of claim 33, wherein the first sending module is used for:
storing the location information of the target terminal obtained from the location management function;
obtaining a second value-added location service request and/or subscription message sent from the vertical application layer function;
filtering out, from stored location information, location information that meets a start time and an end time of a value-added location service indicated through the value-added location service requirement information; and
sending the response and/or subscription notification message to the vertical application layer function based on filtered location information.

39. The apparatus of claim 33, further comprising:
a first verifying module, used for verifying whether the vertical application layer function is authorized to initiate a value-added location service; and
a first storing module, used for storing the value-added location service requirement information comprised in the first value-added location service request and/or subscription message in case that the vertical application layer function is authorized to initiate a value-added location service.

40. The apparatus of claim 33, further comprising:
a fourth sending module, used for sending a value-added location service response message to the vertical application layer function, wherein the value-added location service response message indicates to accept a value-added location service request.

41. The apparatus of claim 33, further comprising:
a fifth obtaining module, used for obtaining a value-added location service revoke subscription message sent from the vertical application layer function.

42. The apparatus of claim 33, wherein the value-added location service requirement information comprises one or more types of the following information:
an identifier of a target terminal;
a range of a geofence;
a trigger condition of a value-added location service;
a start time of a history trace playback;
an end time of a history trace playback; or,
a target location of an arrival reminder.

43. An apparatus for value-added positioning, comprising:
a second sending module, used for sending a first value-added location service request and/or subscription message to a value-added location server; and
a third obtaining module, used for obtaining a response and/or subscription notification message sent from the value-added location server, wherein the response and/or subscription notification message comprises a value-added positioning result, and the value-added positioning result is obtained based on location information, obtained from a location management function, of a target terminal indicated through the first value-added location service request and/or subscription message, and value-added location service requirement information comprised in the first value-added location service request and/or subscription message.

44. The apparatus of claim 43, further comprising:
an eighth obtaining module, used for receiving an alarm notification message sent from the value-added location server in case that a location of the target terminal is within a range of a geofence indicated through the value-added location service requirement information, wherein the alarm notification message is used to notify a vertical application layer function to send an alarm to the target terminal.

45. The apparatus of claim 43, further comprising:
a fifth sending module, used for sending an update message to the value-added location server in case that a vertical application layer function needs to update the value-added location service requirement information; and
a sixth obtaining module, used for obtaining an update response message sent from the value-added location server.

46. The apparatus of claim 43, further comprising:
a seventh obtaining module, used for obtaining a value-added location service response message sent from the value-added location server, wherein the value-added location service response message indicates that the value-added location server accepts a value-added location service request.

47. The apparatus of claim 43, further comprising:
a sixth sending module, used for sending a value-added location service revoke subscription message to the value-added location server.

48. The apparatus of claim 43, wherein the value-added location service requirement information comprises one or more types of the following information:
an identifier of a target terminal;
a range of a geofence;
a trigger condition of a value-added location service;
a start time of a history trace playback;
an end time of a history trace playback; or,
a target location of an arrival reminder.

49. A computer readable storage medium, wherein the computer readable storage medium stores a computer program, and the computer program is used for causing a computer to perform any of the methods of claims 1 to 16.
